# EUROPÄISCHE PATENTSCHRIFT

(11) **EP 2 571 763 B1**
(45) Veröffentlichungstag und Bekanntmachung des Hinweises auf die Patenterteilung: **17.05.2017**
(21) Anmeldenummer: 11720491.7
(22) Anmeldetag: 19.05.2011
(51) Int. Cl.: B64C 27/14, B64D 27/24, B64D 27/02, F02B 63/04

(54) **HYBRIDES ANTRIEBS- UND ENERGIESYSTEM FÜR FLUGGERÄTE**
HYBRID DRIVE AND ENERGYSYSTEM FOR AIRCRAFTS
SYSTEME DE PROPULSION ET D'ALIMENTATION HYBRIDE POUR AÉRONEFS

(30) Priorität: 19.05.2010 DE 102010021026
(43) Veröffentlichungstag der Anmeldung: 27.03.2013
(73) Patentinhaber: Airbus Defence and Space GmbH, 85521 Ottobrunn (DE); AIRBUS HELICOPTERS DEUTSCHLAND GmbH, 86609 Donauwörth (DE)
(72) Erfinder: BOTTI, Jean, 80538 München (DE); STUHLBERGER, Johannes, 83684 Tegernsee (DE); JÄNKER, Peter, 85521 Riemerling (DE); KLÖPPEL, Valentin, 81827 München (DE); NIESL, Georg, 81243 München (DE)
(74) Vertreter: Lorenz & Kopf PartG mbB Patentanwälte, LKGLOBAL
(86) Internationale Anmeldenummer: PCT/EP2011/058125
(87) Internationale Veröffentlichungsnummer: WO 2011/144692

(56) Entgegenhaltungen:
- WO-A1-2009/025231
- WO-A2-2010/106343
- DE-A1-102008 014 404
- DE-B1- 1 581 060
- FR-A1- 2 931 456
- US-A- 4 554 989
- US-A- 4 605 185
- US-A1- 2006 048 988
- US-A1- 2009 145 998

## Beschreibung

### GEBIET DER ERFINDUNG

Die Erfindung betrifft ein Hybridantriebssystem für Flugzeuge, insbesondere Hubschrauber, sowie Hubschrauber mit einem derartigen Hybridantriebssystem.

### HINTERGRUND DER ERFINDUNG

Herkömmlich werden Hubschrauber meist durch eine oder mehrere Gasturbinen angetrieben, wobei die hohe Drehzahl der Gasturbine durch ein Getriebe reduziert werden muss, von welchem aus mechanisch die Rotoren des Hubschraubers angetrieben werden, etwa ein Hauptrotor und ein Heckrotor. Ein derartiges Getriebe stellt offensichtlich hohe Anforderungen an die Ausfallsicherheit und ist daher entsprechend kompliziert, schwer und kostenaufwändig.

Aus der DE 10 2006 056 354 A1 ist ein Hybridantrieb für Flugzeuge bekannt, der eine Gasturbine zum Erzeugen einer ersten Antriebsenergie und einen Elektromotor zum Erzeugen einer zweiten Antriebsenergie aufweist. Die Gasturbine und der Elektromotor sind so ausgebildet, dass einer Antriebseinheit, beispielsweise einem Propeller, des Flugzeugs die erste und/oder die zweite Antriebsenergie bereitgestellt werden kann. Hierzu wird eine Kupplung zwischen Gasturbine und Elektromotor benötigt, oder eine erste Kupplung zwischen Gasturbine und Propellerwelle und eine zweite Kupplung zwischen Elektromotor und Propellerwelle. Für den Elektromotor können ein Brennstoffzellensystem und eine Batterie vorgesehen sein.

Aus der DE 10 2006 056 356 A1 ist ein Antrieb mit mehreren Energiewandlern für ein Flugzeug bekannt, wobei jeder der Energiewandler als Gasturbine, Kolbenmotor oder Elektromotor ausgebildet sein kann. Auch hier ist eine Kupplung zwischen einem ersten und einem zweiten Energiewandler erforderlich, oder zwischen dem ersten und dem zweiten Energiewandler und einem Propeller. In diesem Zusammenhang wird auch erwähnt, dass für den Reiseflug oder in der Nähe eines Flugplatzes nur ein Elektromotor eingesetzt wird, wogegen bei Start und Landung zusätzlich ein Verbrennungsmotor benötigt wird.

In WO 2008/086774 A2 wird ein Flugzeugpropellerantrieb mit einem Propeller, einem Motor und einem Antriebsstrang zwischen dem Propeller und dem Motor vorgeschlagen, bei welchem der Antriebsstrang einen Drehschwingungsdämpfer aufweist. Zwischen einem Dieselmotor und einer Getriebeeingangswelle kann eine Elektromaschine vorgesehen sein, welche als Generator geschaltet eine Batterie laden kann, und als Elektromotor geschaltet, und von der Batterie versorgt, Antrieb zusätzlich zum Dieselmotor bereitstellen kann.

Die DE 10 2008 014 404 A1 beschreibt einen unbemannten Hubschrauber mit einem Hybridantrieb, bei welchem ein Brennstoffmotor einen Generator zur Stromerzeugung antreibt, und der Strom einen als Primärantrieb für Rotorblätter arbeitenden Elektromotor und/oder Pufferbatterien speist, wobei der Elektromotor auch mit Strom aus den Pufferbatterien gespeist werden kann.

Die US 2009/0145998 A1 beschreibt einen Hubschrauber mit Hybridantriebssystem, das eine Gasturbine und einen von diesem über eine primäre Transmissionswelle antreibbaren Generator zur Erzeugung elektrischer Energie aufweist. Ein Elektromotor dient zum Antrieb eines Hauptrotors und kann wahlweise vom Generator oder einem Batteriepack versorgt werden, das elektrische Energie speichert. Ein oder mehrere weitere Rotoren werden über eine sekundäre Transmissionswelle angetrieben.

Die US 4 605 185 beschreibt ein Starrflügelflugzeug mit einem Hybridantrieb, der einen Verbrennungsmotor und einen Generator aufweist, der Strom erzeugt für einen ersten Elektromotor, der einen ersten Propeller antreibt, und für einen zweiten Elektromotor, der einen zweiten Propeller antreibt. Für den Fall, dass der Verbrennungsmotor ausfällt und daher der Generator keinen Strom liefert, ist eine Notfallbatterie vorgesehen, die dann Strom für die beiden Elektromotoren liefert.

Die US 2006/0048988 A1 beschreibt einen Hybridantrieb für Fahrzeuge, beispielsweise Land-, Wasser- oder Luftfahrzeuge, der einen Verbrennungsmotor und ein oder mehrere elektrische Maschinen aufweist, die beide als Elektromotor oder als Generator arbeiten können. Ein Akkumulator kann durch beide Generatoren aufgeladen werden. Im Betrieb kann beispielsweise der eine Elektromotor ein Automatikgetriebe eines Fahrzeuges antreiben, und der andere Elektromotor eine Ölpumpe des Fahrzeuges antreiben, um Hydraulikdruck für Aktuatoren bereitzustellen.

Die US 4 554 989 beschreibt einen Hubschrauber mit einem Hybridantrieb, der einen Turbinenmotor aufweist, der einen Generator antreibt, der Strom an einen ersten Elektromotor liefert, der einen Hauptrotor antreibt, und an einen zweiten Elektromotor, der einen Heckrotor antreibt.

Die FR 2 931 456 A1 (oder die parallele, nicht vorveröffentlichte US 2011/0073717 A1) beschreibt ein Starrflügelflugzeug, dessen Vortrieb durch Verbrennungsmotoren erfolgt. Elektrische Energie wird durch Solarzellen erzeugt und versorgt das Bordnetz des Flugzeugs. Ist überschüssige elektrische Energie vorhanden, so kann der Überschuss jeweils zur Versorgung einer elektrischen Maschine verwendet werden, die den jeweiligen Verbrennungsmotor unterstützt.

Die WO 2009/025 231 A1 (oder die parallele, nicht vorveröffentlichte US 2010/0127114171 A1) beschreibt einen Hubschrauber mit einem Hauptrotor und einem oder mehreren Heckrotoren, die um die Mastachse des Hauptrotors über ein jeweiliges Gestänge verschwenkt werden können, um Schubkomponenten quer zur Längsachse des Hubschraubers (wie üblich) und/oder in Vorwärtsrichtung des Hubschraubers zu erzeugen.

Die DE 1 581 060 B1 beschreibt einen Hubschrauber mit einem um eine senkrechte Achse schwenkbaren Heckrotor und einem Seitenleitwerk, wobei der Heckrotor, mit oder ohne Getriebe, in geringem Maße in Richtung seiner Drehachse gegen die Wirkung einer Schubmesseinrichtung verschiebbar ist, die den Schub des Heckrotors während dessen Schwenkung mittels einer auf dessen Blattwinkelstellvorrichtung wirkenden Regeleinrichtung auf einen konstanten, nahe bei Null liegenden Wert steuert.

### ZUSAMMENFASSUNG DER ERFINDUNG

Die der Erfindung zugrunde liegende Aufgabe besteht in der Bereitstellung eines alternativen hybriden Antriebs- und Energiesystems für Flugzeuge.

Die Aufgabe wird durch die Gegenstände der unabhängigen Ansprüche gelöst. Weiterbildungen der Erfindung sind in den Unteransprüchen angegeben.

Gemäß der Erfindung wird ein Hybridantriebssystem für Flugzeuge, insbesondere Hubschrauber, vorgeschlagen, mit zumindest einem Energieerzeugungsmodul mit einem Verbrennungsmotor und einem von diesem antreibbaren Generator zur Erzeugung elektrischer Energie, und zumindest einem Elektromotor zum (direkten oder indirekten) Antrieb eines Antriebsmittels des Flugzeugs. Antriebsmittel sind Haupt- und Heckrotor eines Hubschraubers. Der Elektromotor kann beispielsweise zusätzliche Leistung für einen herkömmlichen Antrieb eines Hubschraubers bereitstellen.

Bei der Erfindung ist ein zweiter Elektromotor zum Antrieb eines zweiten Antriebsmittels des Flugzeugs vorgesehen, wobei das zweite Antriebsmittel ein Heckrotor eines Hubschraubers ist. Gemäß der Erfindung ist zumindest ein weiteres Energieerzeugungsmodul vorgesehen. Dieses kann eine Kombination aus einem zweiten Verbrennungsmotor und einem zweiten Generator sein; aber auch etwa eine Brennstoffzelleneinheit. Gemäß der Erfindung ist eine Speichereinheit für elektrische Energie vorgesehen, beispielsweise eine Batterieeinheit. Diese Speichereinheit kann so ausgelegt sein, dass es ermöglicht wird, dass Startvorgang und Steigflug eines Hubschraubers allein oder zu großen Teilen durch Energieversorgung von der Speichereinheit durchgeführt werden können, welche einen ersten Elektromotor zum Antrieb eines ersten Antriebsmittels und einen zweiten Elektromotor zum Antrieb eines zweiten Antriebsmittels des Hubschraubers antreibt. Zur weiteren Erhöhung der Sicherheit kann eine weitere, zusätzliche Speichereinheit für elektrische Energie, etwa eine Batterieeinheit, vorgesehen sein.

Hierbei wird beim Start eines Hubschraubers dessen Verbrennungsmotor bzw. dessen Verbrennungsmotoren nur so weit hochgefahren, wie dies zur Erbringung der für den Start benötigten Gesamtleistung erforderlich ist. Dies führt zu erheblich verringerten Geräuschemissionen, im Vergleich zu einem herkömmlichen Hubschrauberantrieb, beim Start und entsprechend bei der Landung.

Gemäß einer Ausführungsform der Erfindung ist das weitere Energieerzeugungsmodul als Brennstoffzelleneinheit ausgebildet. Diese kann anstelle eines aus Verbrennungsmotor und Generator bestehenden Energieerzeugungsmoduls eingesetzt werden, wenn dieses ausfällt, aber auch zusätzlich zu einem oder mehreren Energieerzeugungsmodulen.

Weiterhin betrifft die Erfindung einen Hubschrauber mit einem Hybridantriebssystem, wie dies voranstehend geschildert wurde.

Gemäß einer Ausführungsform der Erfindung ist ein derartiger Hubschrauber mit einem Hauptrotor und einem Heckrotor versehen, der als ummantelter Heckrotor ausgebildet ist, welcher um eine Hochachse des Hubschraubers drehbar ist.

Der Heckrotor und der Heckrotorantrieb können um die Hochachse des Hubschraubers geschwenkt werden, um im Vorwärtsflug zum Vortrieb beizutragen. Hierzu kann der ummantelte Heckrotor oben und unten drehbar gelagert und mit zumindest einem Verstell-Aktuator ausgerüstet sein.

Um weiterhin den Hauptrotor-Drehmomentenausgleich zu gewährleisten, wird der Heckrotor nur so weit gedreht, dass noch eine ausreichend lateral wirkende Schubkomponente übrig bleibt.

Damit der ummantelte Heckrotor so weit um die Hochachse gedreht werden kann, dass er nur Vortrieb in Flugrichtung erzeugt, kann ein Seitenruder vorgesehen sein, welches den Drehmomentenausgleich im Vorwärtsflug übernimmt.

Weiterhin betrifft die Erfindung ein Verfahren zum Steuern eines Hybridantriebssystems bzw. zum Steuern eines Hubschraubers mit einem derartigen Hybridantriebssystem gemäß der Erfindung, bei welchem bei erhöhtem Leistungsbedarf dem einen Energieerzeugungsmodul zusätzlich das weitere Energieerzeugungsmodul und/oder die Speichereinheit für elektrische Energie zugeschaltet wird.

Bereits mit zwei Energieerzeugungsmodulen aus jeweils einem Verbrennungsmotor und einem Generator besteht Redundanz, welche durch die Speichereinheit für elektrische Energie noch erhöht wird. Für einen noch weiter erhöhten Leistungsbedarf und/oder noch weiter erhöhte Redundanz sind ein weiteres, zusätzliches Energieerzeugungsmodul (Verbrennungsmotor/Generatur) und eine zusätzliche Speichereinheit für elektrische Energie vorgesehen.

Gemäß einer Ausführungsform der Erfindung wird in der Start- und der Landephase des Flugzeugs der zumindest eine Elektromotor nur von der Speichereinheit für elektrische Energie versorgt. Dies sorgt für geringere Lärmemissionen im Vergleich zu einem herkömmlichen Flugzeug- oder Hubschrauberantrieb.

Gemäß einer Ausführungsform der Erfindung kann zur Sicherheit in der Start- und der Landephase des Flugzeugs der Verbrennungsmotor im Leerlauf oder erheblich unterhalb seiner Nennleistung im Betrieb sein.

Gemäß einer Ausführungsform der Erfindung wird zum Steuern eines Hubschraubers dessen Heckrotor so weit um die Hochachse gedreht, dass eine laterale Schubkomponente des (ummantelten) Heckrotors das durch den Hauptrotor hervorgerufene Gierdrehmoment ausgleicht. Hierdurch stellt der Heckrotor eine laterale Schubkomponente zum Ausgleich des durch den Hauptrotor hervorgerufenen Gierdrehmoments zur Verfügung, und darüber hinaus die Schubkomponente in Vorwärtsrichtung (Flugrichtung).

Gemäß einer Ausführungsfrom der Erfindung kann jedoch beim Steuern eines Hubschraubers so vorgegangen werden, dass der Heckrotor so weit um die Hochachse gedreht wird, dass der Heckrotorschub in Richtung der Längsachse des Hubschraubers nach hinten gerichtet ist, und das durch den Hauptrotor hervorgerufene Gierdrehmoment durch entsprechende Einstellung des Seitenruders ausgeglichen wird. Dies sorgt für eine optimale Unterstützung des Vortriebs durch den Heckrotor.

Weiterhin wird dadurch, dass ein nicht unerheblicher Anteil des Vortriebs des Hubschraubers durch den Heckrotor erreicht wird, die Lärmemissionsquelle vom Kabinenbereich (Hauptrotor) des Hubschraubers weiter nach hinten zum Heckrotor hin verlagert, wodurch die Lärm- und Geräuschbelastung in der Kabine des Hubschraubers verringert wird.

### KURZE BESCHREIBUNG DER FIGUREN

Es zeigt:
FIG. 1 eine schematische Darstellung eines Mild-Hybridantriebssystems zur Erläuterung der Erfindung;
FIG. 2 eine schematische Darstellung eines Hybridantriebssystems zur Erläuterung der Erfindung mit einem Energieerzeugungsmodul;
FIG. 3 eine schematische Darstellung eines Hybridantriebssystems gemäß der Erfindung mit zwei Energieerzeugungsmodulen;
FIG. 4 eine schematische Darstellung eines Hybridantriebssystems gemäß der Erfindung, bei welchem ein Haupt- und ein Heckrotor jeweils über eine Kombination aus Elektromotor und Getriebe angetrieben werden;
FIG. 5 eine schematische Darstellung eines Hybridantriebssystems gemäß der Erfindung mit einem ersten Energieerzeugungsmodul mit einem Verbrennungsmotor und einem von diesem antreibbaren Generator, sowie mit einem zweiten, als Brennstoffzellensystem ausgebildeten Energieerzeugungsmodul;
FIG. 6 eine schematische Darstellung des modularen Aufbaus des Hybridantriebssystems gemäß der Erfindung für einen Hubschrauber;
FIG. 7 eine Seitenansicht auf einen Heckausleger eines Hubschraubers gemäß der Erfindung; und
FIG. 8 eine Aufsicht auf den Heckausleger eines Hubschraubers mit einem beweglichen Seitenruder.

### DETAILLIERTE BESCHREIBUNG VON AUSFÜHRUNGSBEISPIELEN

Die Darstellungen in den Figuren sind schematisch und nicht maßstäblich.

Für gleiche oder ähnliche Elemente werden gleiche oder entsprechende Bezugsziffern verwendet.

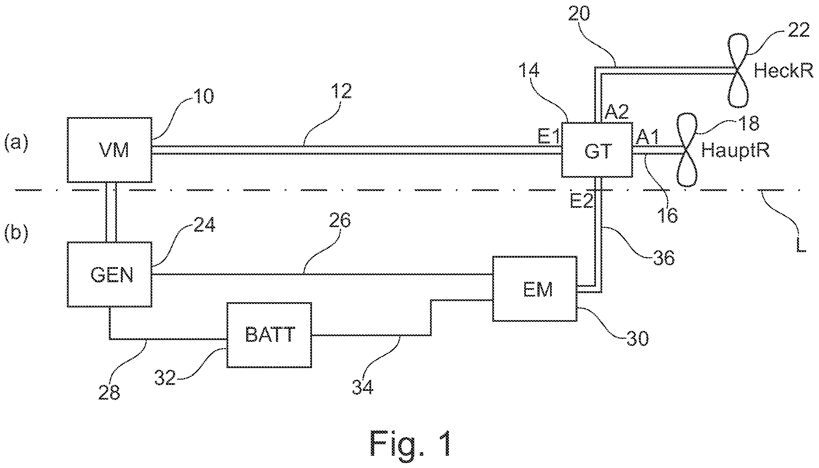

Fig. 1 zeigt schematisch das Hybridantriebssystem für Flugzeuge, insbesondere Hubschrauber. Oberhalb der gestrichelten Linie L ist bei (a) ein an sich herkömmlicher Hubschrauberantrieb dargestellt, mit einem Verbrennungsmotor 10, der über eine Welle 12 einen Eingang E1 eines Getriebes 14 antreibt, wobei dann das Getriebe über einen Ausgang A1 eine Welle 16 und mit dieser einen Hauptrotor 18 antreibt, und über einen weiteren Ausgang A2 über eine Welle 20 einen Heckrotor 22 des Hubschraubers.

Weiterhin ist unterhalb der gestrichelten Linie L bei (b) in Fig. 1 ein vom Verbrennungsmotor 10 angetriebener Generator 26 vorgesehen. Dieser könnte allerdings auch über einen weiteren (nicht dargestellten) Verbrennungsmotor angetrieben werden. Generator 24 liefert über eine Leitung 26 Strom an einen Elektromotor 30, der über eine Welle 36 einen Eingang E2 des Getriebes 14 antreibt und so zusätzliche Leistung zur Verfügung stellt.

Weiterhin kann der Generator 24 über eine Leitung 28 eine Batterie 32 aufladen, und kann die Batterie 32 über eine Leitung 34 den Elektromotor 30 mit Strom versorgen, etwa zusätzlich zur Stromversorgung durch den Generator 24, oder alternativ hierzu.

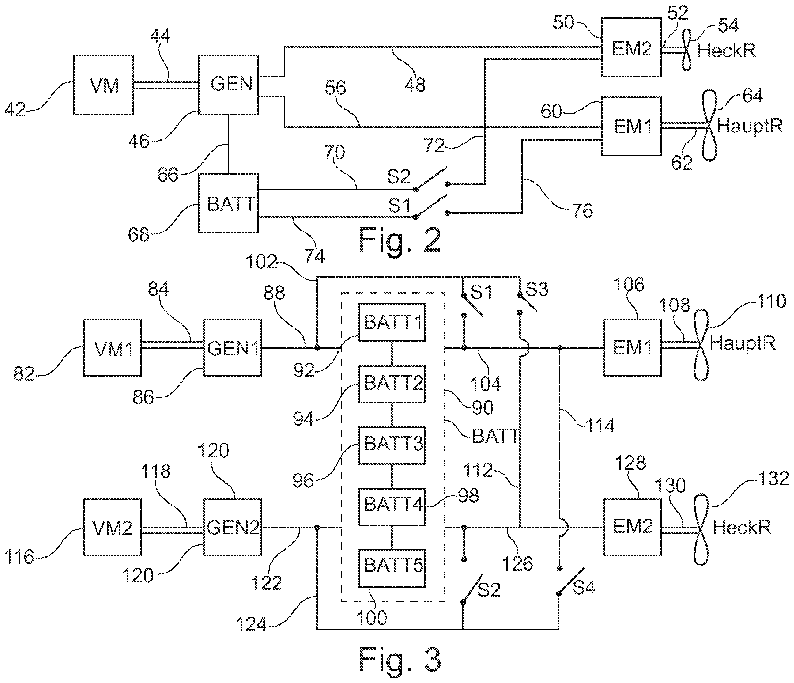

In Fig. 2 ist ein Hybridantriebssystem für Hubschrauber dargestellt, das einen Verbrennungsmotor 42 aufweist, der über eine Welle 44 einen Generator 46 antreibt. Generator 46 versorgt über eine Leitung 56 einen ersten Elektromotor 60 mit Strom, der über eine Welle 62 einen Hauptrotor 64 des Hubschraubers antreibt. Weiterhin versorgt der Generator über eine Leitung 48 einen zweiten Elektromotor 50 mit Strom, der über eine Welle 52 einen Heckrotor 54 des Hubschraubers antreibt.

Darüber hinaus kann der Generator 46 über eine Leitung 66 eine Batterie (einen Batteriesatz) 68 aufladen. Dies kann beispielsweise im Reiseflug des Hubschraubers erfolgen, wenn der Leistungsbedarf für den Elektromotor 1 des Hauptrotors 64 nicht so groß ist wie beim Start.

Weiterhin kann die Batterie 60 über eine Leitung 74, einen Schalter S1 und eine Leitung 76 den ersten Elektromotor 60 mit Strom versorgen, zusätzlich zur Stromversorgung durch den Generator 46, oder alternativ zu dieser. Entsprechend kann die Batterie 68 über eine Leitung 70 und einen Schalter S2 und eine weitere Leitung 72 den zweiten Elektromotor 2 für den Heckrotor 64 mit Strom versorgen.

In Fig. 3 ist ein Hybridantriebssystem für einen Hubschrauber dargestellt, bei welchem ein erstes Energieerzeugungsmodul mit Verbrennungsmotor 82 und Generator 86 sowie ein zweites Energieerzeugungsmodul mit einem zweiten Verbrennungsmotor 116 und einem zweiten Generator 120 vorgesehen sind. Diese beiden Energieerzeugungsmodule können zusammen oder alternativ betrieben werden, wenn sie eine entsprechende, für den Betrieb des Hubschraubers erforderliche Leistung aufbringen. Es kann aber auch beispielsweise bei bestimmten Betriebszuständen des Hubschraubers mehr Leistung von dem ersten Energieerzeugungsmodul 82, 86 aufgebracht werden, und bei anderen Betriebszuständen mehr Leistung von dem zweiten Energieerzeugungsmodul 116, 120.

Der erste Generator 86 liefert über eine Leitung 88 Strom an einen insgesamt mit dem Bezugszeichen 90 bezeichneten Batteriesatz, der einzelne Batterieuntergruppen 92, 94, 96, 98, 100 aufweist, die in beliebigen Kombinationen mit einem der Eingänge (Leitungen 88, 122) bzw. Ausgänge (Leitungen 104, 126) der Batterieeinheit 90 verbunden werden können.

Der erste Generator 86 kann über eine Leitung 88 und einen Schalter S1 sowie eine Leitung 104 einen ersten Elektromotor 106 versorgen, der über eine Welle 108 den Hauptrotor 110 des Hubschraubers antreibt.

Der Generator 86 kann jedoch auch über die Leitung 102 und einen Schalter S3 und Leitungen 112, 126 einen zweiten Elektromotor 128 versorgen, der über eine Welle 130 den Heckrotor 132 des Hubschraubers antreibt.

Entsprechendes gilt für den zweiten Generator 120, der über die Leitung 122 und eine Leitung 124 und einen Schalter S2 sowie die Leitung 126 den zweiten Elektromotor 128 mit Strom versorgen kann, oder über die Leitung 124 und einen Schalter S4 sowie eine Leitung 114 und die Leitung 104 den ersten Elektromotor 106.

Insgesamt weist daher das in Fig. 3 dargestellte Hybridantriebssystem eine hohe Redundanz auf, infolge des ersten Energieerzeugungsmoduls 82, 86, des zweiten Energieerzeugungsmoduls 116, 120, und der Batterieeinheit 90, welche einen Energiezwischenspeicher und damit ein weiteres Energieerzeugungsmodul für den ersten Elektromotor 106 und/oder den zweiten Elektromotor 128 darstellt.

Jedes Energieerzeugungsmodul in Fig. 3 kann an einem geeigneten Ort im Hubschrauber angeordnet sein, unabhängig von dem ersten Elektromotor 106 zum Antrieb des Hauptrotors 110 und dem zweiten Elektromotor 128 für den Heckrotor 132. So können etwa die beiden Energieerzeugungsmodule unterhalb des Kabinenbodens eines Hubschraubers angeordnet sein, ebenso wie die Batterieeinheit 90. Dies sorgt dafür, dass sich nicht wie bei herkömmlichen Hubschrauberantrieben relativ schwere Komponenten relativ weit oben im Hubschrauber befinden müssen, sondern der Schwerpunkt des Hubschraubers nach unten verlagert werden kann.

Bezüglich der Verbrennungsmotoren wird darauf hingewiesen, dass diese vorzugsweise als Wankelmotoren ausgebildet sind, obwohl auch Kolbenmotoren wie etwa Dieselmotoren eingesetzt werden können. Grundsätzlich kann auch eine Gasturbine als Verbrennungsmotor eingesetzt werden.

Herkömmliche Hubschrauberturbotriebwerke weisen zwei Turbinenstufen auf, die erste zum Antrieb des Triebwerksverdichters und die zweite zur Erzeugung des Rotordrehmoments. Die sehr hohe Turbinendrehzahl muss mittels Getrieben auf die Rotordrehzahl untersetzt werden. Wird die Turbine dagegen zur Energieerzeugung, d.h. zum Antrieb eines Generators eingesetzt, so können zweite Turbinenstufe und Reduktionsgetriebe wegfallen. Die erste treibt zugleich Verdichter und Generator an.

Die bei der Erfindung verwendeten Elektromotoren sind vorzugsweise als trägheitsarmer Direktantrieb hoher Leistungsdichte ausgebildet, wie in der DE 10 2007 013 732 A1 beschrieben, also als elektrische Maschinen mit Permanenterregung, die sich durch hohes spezifisches Drehmoment und Leistungsdichte sowie ein geringes Trägheitsmoment insbesondere für Direktantrieb der Rotoren des Hubschraubers eignen.

Das erfindungsgemäße Konzept für ein Hybridantriebssystem eignet sich besonders gut dafür, einen Hubschrauber dadurch an eine erhöhte Leistungsanforderung anzupassen, dass ein zusätzliches Energieerzeugungsmodul aus Verbrennungsmotor und Generator vorgesehen wird, oder eine zusätzliche Batterieeinheit.

Dieses modulare Konzept eignet sich auch besonders gut dazu, Familien von Hubschraubern unterschiedlicher Größe mit unterschiedlichen Leistungsanforderungen anzutreiben. Je nach Erfordernis werden nämlich standardisierte Energieerzeugungsmodule (Verbrennungsmotor/Generator) in der erforderlichen Anzahl eingesetzt. Dies stellt ein so genanntes Familienkonzept dar, das erhebliche Auswirkungen auf die Senkung von Entwicklungskosten einer Hubschrauberfamilie hat.

Insbesondere ermöglicht das in den Fig. 2 und 3 dargestellte Hybridantriebssystem einen "getriebelosen" Hubschrauber, der ohne das bei einem herkömmlichen Hubschrauberantrieb erforderliche Getriebe auskommt.

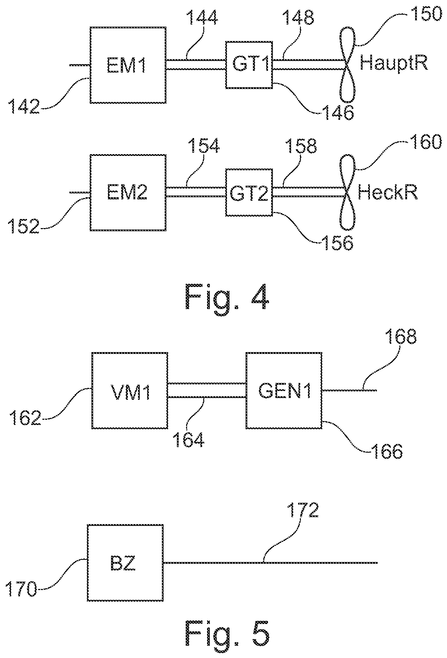

Sollte jedoch zwischen dem Elektromotor für den Hauptrotor und/oder dem Elektromotor für den Heckrotor ein Getriebe erforderlich sein, so kann dieses gemäß Fig. 4 in der Nähe des Elektromotors und des betreffenden Rotors vorgesehen werden. Fig. 4 zeigt einen ersten Elektromotor 142, der über eine Welle 144 ein erstes Getriebe 146 antreibt, das wiederum über eine Welle 148 einen Hauptrotor 150 eines Hubschraubers antreibt. Entsprechend treibt ein zweiter Elektromotor 152 über eine Welle 154 ein zweites Getriebe 156 an, das über eine Welle 158 einen Heckrotor 160 des Hubschraubers antreibt.

In Fig. 3 sind die beiden Energieerzeugungsmodule 82, 86 und 116, 120 gleichartig ausgebildet. Sie können aber auch verschieden sein, wie dies in Fig. 5 gezeigt ist. Ein Verbrennungsmotor 162 treibt über eine Welle 164 einen Generator 166 an, der über eine Leitung 168 Strom abgibt, welche der Leitung 88 in Fig. 3 entspricht. Ein zweites Energieerzeugungsmodul in Fig. 5 besteht aus einer Brennstoffzelle 170, die über eine Leitung 172 Strom abgibt, welche der Leitung 122 in Fig. 3 entspricht.

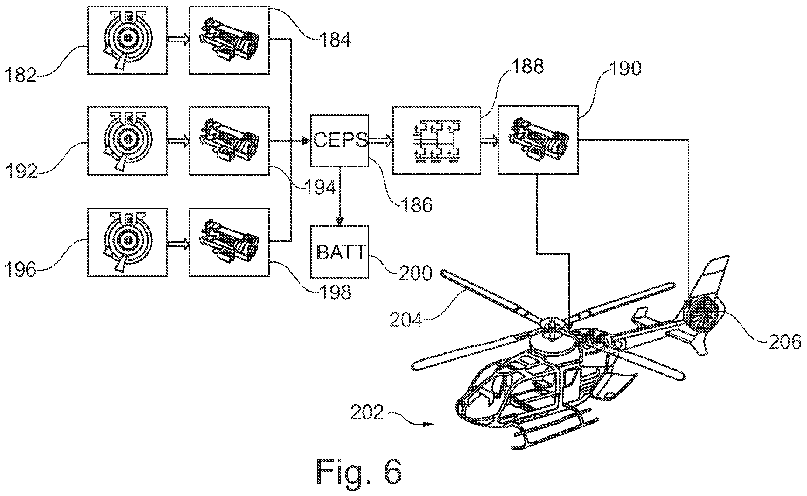

Fig. 6 verdeutlicht nochmals den modularen Aufbau des Hybridantriebssystems für einen Hubschrauber 202 gemäß der Erfindung. Ein erstes Energieerzeugungsmodul besteht aus einem Wankelmotor 182 und einem Generator 84, ein zweites Energieerzeugungsmodul aus einem Wankelmotor 192 und einem Generator 194, und ein drittes Energieerzeugungsmodul aus einem Wankelmotor 196 und einem Generator 198. Jedes dieser Energieerzeugungsmodule bzw. dessen entsprechender Generator 184, 194, 198 ist an ein zentrales Energiesteuersystem 186 angeschlossen. Dieses sorgt beispielsweise für das Aufladen einer Batterie 200 bzw. die Entnahme elektrischer Energie aus dieser. Das Energiesteuersystem 186 liefert elektrische Energie über einen Inverter 188 an einen ersten Elektromotor 190 eines Hauptrotors 204 bzw. einen zweiten Elektromotor 190 eines Heckrotors 206 des Hubschraubers 202.

In diesem Zusammenhang wird darauf hingewiesen, dass bei den sich zukünftig immer mehr durchsetzenden Fly-by-Wire-Steuerungen nach dem gegenwärtigen Stand der Technik Bewegungssensoren an den Steuerorganen die Pilotensteuerabsicht erfassen und diese an den zentralen Bordcomputer melden. Dieser setzt die Signale in elektrische Ansteuerungsspannungen für die Schub-Einstellung von Haupt- und Heckrotor um.

Bei einem Hubschrauber mit einem Hybridantrieb gemäß der Erfindung erfolgt dies in vorteilhafter Weise elektrisch, beim Hauptrotor z.B. in Form elektrischer Drehspindeln unterhalb der die Blatteinstellwinkel definierenden Taumelscheiben, oder durch piezoelektrisch betriebene Servoklappen an den Blatthinterkanten, oder durch eine Kombination beider Komponenten, und beim Heckrotor z.B. durch ebensolche Spindeln unterhalb der für den Blattanstellwinkel verantwortlichen Schiebehülse, oder durch Variation der Heckrotordrehzahl.

Da alle diese Steuervorgänge elektrisch erfolgen, und auch die Rotoren jeweils über einen Elektromotor angetrieben werden, kann der Hubschrauber insgesamt mit einer einheitlichen Energieform betrieben werden.

Bei der vorgenannten Drehzahlvariation sowie beim Schwenken des Heckrotors ist ohnehin ein elektrischer Antrieb erforderlich. Ein hier ebenfalls möglicher Hydraulikantrieb würde dagegen die Forderung nach Energieeinheitlichkeit verletzen.

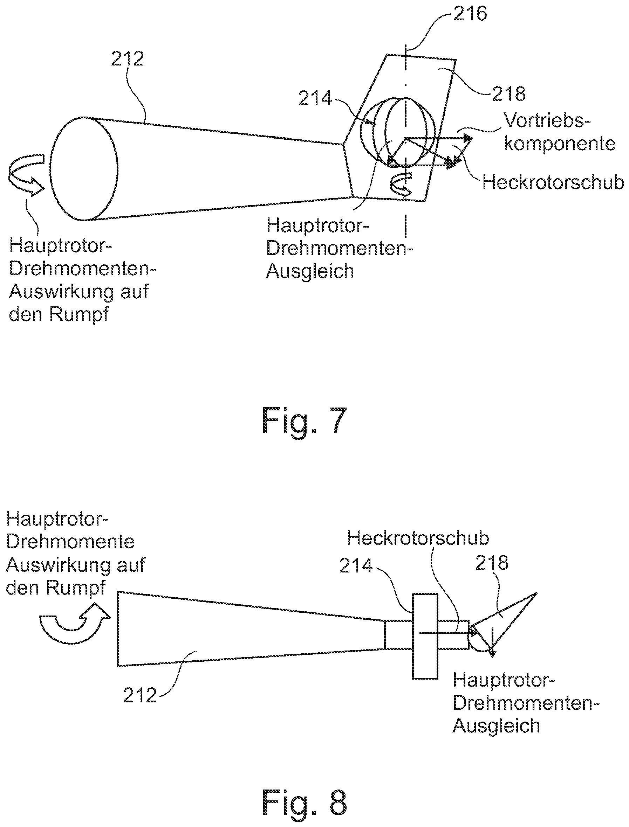

Die Fig. 7 und 8 verdeutlichen die Bau- und Betriebsweise eines Hubschraubers gemäß der Erfindung, der mit einem um die Hochachse drehbaren, ummantelten Heckrotor versehen ist. Fig. 7 zeigt den Heckausleger der Erfindung, bei welcher der Heckrotorschub eine laterale Komponente aufweist, wogegen bei dem Beispiel von Fig. 8 der Ausgleich des Hauptrotor-Drehmoments durch ein Seitenruder bewirkt wird.

Wie in Fig. 7 dargestellt, weist ein Heckausleger 212 eines Hubschraubers einen ummantelten Heckrotor 214 auf, der um eine Hochachse 216 des Hubschraubers drehbar ist, so dass er eine Vortriebskomponente zum Vortrieb des Hubschraubers zur Verfügung stellt, aber auch eine laterale Komponente für den Ausgleich des von dem Hauptrotor hervorgerufenen Drehmoments.Bei dem in Fig. 8 dargestelltem Beispiel dagegen kann zumindest im Vorwärtsflug (Reiseflug) des Hubschraubers der ummantelte Heckrotor 214 so weit um die Hochachse 216 (Fig. 7) gedreht werden, dass er eine reine Vortriebskomponente durch den Heckrotorschub erzeugt. Der Ausgleich des von dem Hauptrotor hervorgerufenen Drehmoments erfolgt durch entsprechende Verstellung eines Seitenruders 218 im Reiseflug.

### BEZUGSZEICHENLISTE

- L: gestrichelte Linie
- 10: Verbrennungsmotor
- 12: Welle
- 14: Getriebe
- 16: Welle
- 18: Hauptrotor
- 20: Welle
- 22: Heckrotor
- 24: Generator
- 26: Leitung
- 28: Leitung
- 30: Elektromotor
- 32: Batterieeinheit
- 34: Leitung
- 36: Welle
- A1, A2: Ausgänge von 14
- E1, E2: Eingänge
- 42: Verbrennungsmotor
- 44: Welle
- 46: Generator
- 48: Leitung
- 50: Elektromotor 2
- 52: Welle
- 54: Heckrotor
- 56: Leitung
- 60: Elektromotor 1
- 62: Welle
- 64: Hauptrotor
- 66: Leitung
- 68: Batterieeinheit
- 70: Leitung
- 72: Leitung
- 74: Leitung
- 76: Leitung
- 51, 52: Schalter
- 82: Verbrennungsmotor 1
- 84: Welle
- 86: Generator 1
- 88: Leitung
- 90: Batterieeinheit
- 92: Batterie
- 94: Batterie
- 96: Batterie
- 98: Batterie
- 100: Batterie
- 102: Leitung
- 104: Leitung
- 106: Elektromotor 1
- 108: Welle
- 110: Hauptrotor
- 112: Leitung
- 114: Leitung
- 116: Verbrennungsmotor 2
- 118: Welle
- 120: Generator 2
- 122: Leitung
- 124: Leitung
- 126: Leitung
- 128: Elektromotor 2
- 130: Welle
- 132: Heckrotor
- 142: Elektromotor 1
- 144: Leitung
- 146: Getriebe 1
- 148: Welle
- 150: Hauptrotor
- 152: Elektromotor 2
- 154: Leitung
- 156: Getriebe 2
- 158: Welle
- 160: Heckrotor
- 162: Verbrennungsmotor 1
- 164: Welle
- 166: Generator 1
- 168: Leitung
- 170: Brennstoffzelleneinheit
- 172: Leitung
- 182: Verbrennungsmotor
- 184: Generator
- 186: Energiesteuersystem
- 188: Inverter (Wechselrichter)
- 190: Elektromotor
- 192: Verbrennungsmotor
- 194: Generator
- 196: Verbrennungsmotor
- 198: Generator
- 200: Batterieeinheit
- 202: Hubschrauber
- 204: Hauptrotor
- 206: Heckrotor
- 212: Heckausleger
- 214: Ummantelter Heckrotor
- 216: Hochachse
- 218: Seitenruder

## Patentansprüche

1. Hybridantriebssystem für einen Hubschrauber mit
(a) einem ersten Energieerzeugungsmodul (82, 86), mit einem Verbrennungsmotor (82) und einem von diesem antreibbaren Generator (86) zur Erzeugung elektrischer Energie;
(b) einem ersten Elektromotor (106) zum Antrieb eines Hauptrotors (110) des Hubschraubers;
(c) einem zweiten Elektromotor (128) zum Antrieb eines Heckrotors (132) des Hubschraubers;
(d) zumindest einem weiteren Energieerzeugungsmodul (116, 120; 170); und
(e) einer Speichereinheit (90) für elektrische Energie;
**dadurch gekennzeichnet, dass** das Hybridantriebssystem weiterhin aufweist
(f) einen Heckrotor, der oben und unten drehbar gelagert ist und so weit um eine Hochachse des Hubschraubers drehbar ist, dass ein durch den Hauptrotor hervorgerufenes Gierdrehmoment durch eine laterale Schubkomponente des Heckrotors ausgleichbar ist.

2. Hybridantriebssystem nach Anspruch 1,
**dadurch gekennzeichnet, dass** das erste Energieerzeugungsmodul (82, 86) und das weitere Energieerzeugungsmodul (116, 120) gleich oder gleichartig ausgebildet sind.

3. Hybridantriebssystem nach Anspruch 1,
**dadurch gekennzeichnet, dass** das weitere Energieerzeugungsmodul als Brennstoffzelleneinheit (170) ausgebildet ist.

4. Hubschrauber **dadurch gekennzeichnet, dass** es mit einem Hybridantriebssystem nach einem der Ansprüche 1 bis 3 ausgestattet ist.

5. Hubschrauber (202) nach Anspruch 4, **dadurch gekennzeichnet, dass** der Heckrotor (206) als ummantelter Heckrotor ausgebildet ist.

6. Hubschrauber nach Anspruch 5, **gekennzeichnet durch** ein Seitenruder (218).

7. Verfahren zum Steuern eines Hybridantriebssystems nach einem der Ansprüche 1 bis 3 oder zum Steuern eines Hubschraubers nach einem der Ansprüche 4 bis 6 mit einem derartigen Hybridantriebssystem,
**dadurch gekennzeichnet, dass** bei erhöhtem Leistungsbedarf dem ersten Energieerzeugungsmodul (82, 86) zusätzlich das weitere Energieerzeugungsmodul (116, 120) und/oder die Speichereinheit (90) für elektrische Energie zugeschaltet wird.

8. Verfahren nach Anspruch 7,
**dadurch gekennzeichnet, dass** in der Start- und der Landephase des Hubschraubers der erste Elektromotor (106) nur von der Speichereinheit (90) für elektrische Energie versorgt wird.

9. Verfahren nach Anspruch 8,
**dadurch gekennzeichnet, dass** in der Start- und Landephase des Hubschraubers der Verbrennungsmotor (82) im Leerlauf läuft.

10. Verfahren zum Steuern eines Hubschraubers nach einem der Ansprüche 7 bis 9,
**dadurch gekennzeichnet, dass** der Heckrotor (206) so weit um die Hochachse (216) gedreht wird, dass eine laterale Schubkomponente des Heckrotors (206) das durch den Hauptrotor hervorgerufene Gierdrehmoment ausgleicht.

11. Verfahren zum Steuern eines Hubschraubers nach einem der Ansprüche 7 bis 9,
**dadurch gekennzeichnet, dass** der Heckrotor (206) so weit um die Hochachse (216) gedreht wird, dass der Heckrotorschub in Richtung der Längsachse des Hubschraubers nach hinten gerichtet ist, und das durch den Hauptrotor hervorgerufene Gierdrehmoment durch entsprechende Einstellungen des Seitenruders (218) ausgeglichen wird.

## Claims

1. A hybrid drive system for a helicopter, the system comprising
(a) a first energy generating module (82, 86) comprising an internal combustion engine (82) and a generator (86) to be powered by the internal combustion engine to generate electrical energy;
(b) a first electric motor (106) for powering a main rotor (110) of the helicopter;
(c) a second electric motor (128) for powering a tail rotor (132) of the helicopter;
(d) at least one additional energy generating module (116, 120; 170); and
(e) a storage unit (90) for electrical energy;
**characterized in that** the hybrid drive system further comprises
(f) a tail rotor which is rotatably supported at the top and at the bottom and may be rotated around a vertical axis of the helicopter by an amount such that a yawing moment produced by the main rotor may be compensated by a lateral thrust component of the tail rotor.

2. A hybrid drive system according to claim 1,
**characterized in that** the first energy generating module (82, 86) and the additional energy generating module (116, 120) have the same or similar design.

3. A hybrid drive system according to claim 1,
**characterized in that** the additional energy generating module is designed as a fuel cell unit (170).

4. A helicopter, **characterized in that** it is equipped with a hybrid drive system according to one of claims 1 to 3.

5. A helicopter according to claim 4, **characterized in that** the tail rotor (206) is designed as a jacketed tail rotor.

6. A helicopter according to claim 5, **characterized by** a rudder (218).

7. A method for controlling a hybrid drive system according to one of claims 1 to 3 or for controlling a helicopter according to one of claims 4 to 6 comprising such a hybrid drive system,
**characterized in that** given an elevated power requirement additionally the additional energy generating module (116, 120) and/or the storage unit (90) for electrical energy is/are connected to the first energy generating module (82, 86).

8. A method according to claim 7,
**characterized in that** during the takeoff and landing phases of the helicopter the first electric motor (106) is supplied only by the storage unit (90) for electrical energy.

9. A method according to claim 8,
**characterized in that** the internal combustion engine (82) idles during the takeoff and landing phases of the helicopter.

10. A method for controlling a helicopter according to one of claims 7 to 9,
**characterized in that** the tail rotor (206) is rotated around the vertical axis (216) to such an extent that a lateral thrust component of the tail rotor (206) offsets the yawing moment caused by the main rotor.

11. A method for controlling a helicopter according to one of claims 7 to 9,
**characterized in that** the tail rotor (206) is rotated around the vertical axis (216) to such an extent that the tail rotor thrust in the direction of the longitudinal axis of the helicopter is directed to the back, and that the yawing moment caused by the main rotor is offset by correspondingly adjusting the rudder (218).

## Revendications

1. Système de propulsion hybride pour un hélicoptère, comportant :
(a) un premier module (82, 86) générateur d'énergie, comportant un moteur à combustion (82) et un générateur (86) entraînable par celui-ci, destiné à générer de l'énergie électrique ;
(b) un premier moteur électrique (106) destiné à l'entraînement d'un rotor principal (110) de l'hélicoptère ;
(c) un deuxième moteur électrique (128) destiné à l'entraînement d'un rotor arrière (132) de l'hélicoptère ;
(d) au moins un module supplémentaire (116, 120 ; 170) générateur d'énergie ; et
(e) une unité d'accumulation (90) d'énergie électrique, **caractérisé en ce que** le système de propulsion hybride présente en outré :
(f) un rotor arrière qui est logé de manière rotative en haut et en bas et est rotatif autour d'un axe vertical de l'hélicoptère de manière à ce qu'un couple de lacet causé par le rotor principal soit compensable par une composante de poussée latérale du rotor arrière.

2. Système de propulsion hybride selon la revendication 1, **caractérisé en ce que** le premier module (82, 86) générateur d'énergie et le module supplémentaire (116, 120) générateur d'énergie sont réalisés de manière identique ou similaire.

3. Système de propulsion hybride selon la revendication 1, **caractérisé en ce que** le module supplémentaire (116, 120) générateur d'énergie est réalisé en tant qu'unité de piles à combustible (170).

4. Hélicoptère, **caractérisé en ce qu'**il est équipé d'un système de propulsion hybride selon l'une quelconque des revendications 1 à 3.

5. Hélicoptère (202) selon la revendication 4, **caractérisé en ce que** le rotor arrière (206) est réalisé en tant que rotor de queue caréné.

6. Hélicoptère selon la revendication 5, **caractérisé par** un gouvernail de direction (218).

7. Procédé de commande d'un système de propulsion hybride selon l'une quelconque des revendications 1 à 3 ou de commande d'un hélicoptère selon l'une quelconque des revendications 4 à 6 à l'aide d'un tel système de propulsion hybride,
**caractérisé en ce qu'**en cas de besoin élevé en énergie, le module supplémentaire (116, 120) générateur d'énergie et/ou l'unité d'accumulation (90) d'énergie électrique sont connectés additionnellement au premier module (82, 86) générateur d'énergie.

8. Procédé selon la revendication 7,
**caractérisé en ce que** pendant la phase de décollage et d'atterrissage de l'hélicoptère, le premier moteur électrique (106) est seulement alimenté par l'unité d'accumulation (90) d'énergie électrique.

9. Procédé selon la revendication 8,
**caractérisé en ce que** pendant la phase de décollage et d'atterrissage de l'hélicoptère, le moteur à combustion (82) marche à vide.

10. Procédé de commande d'un hélicoptère selon l'une quelconque des revendications 7 à 9,
**caractérisé en ce que** le rotor arrière (206) est tourné autour de l'axe vertical (216) de manière à ce qu'une composante de poussée latérale du rotor arrière (206) compense le couple de lacet causé par le rotor principal.

11. Procédé de commande d'un hélicoptère selon l'une quelconque des revendications 7 à 9,
**caractérisé en ce que** le rotor arrière (206) est tourné autour de l'axe vertical (216) de manière à ce que la poussée du rotor arrière soit orientée vers l'arrière en direction de l'axe longitudinal de l'hélicoptère, et **en ce que** le couple de lacet causé par le rotor principal soit compensé par des réglages correspondants du gouvernail de direction (218).
